# EUROPÄISCHE PATENTSCHRIFT

(11) **EP 1 590 630 B1**
(45) Veröffentlichungstag und Bekanntmachung des Hinweises auf die Patenterteilung: **04.07.2007**
(21) Anmeldenummer: 04707921.5
(22) Anmeldetag: 04.02.2004
(51) Int. Cl.: G01D 3/08, G01F 23/22

(54) **VORRICHTUNG UND VERFAHREN ZUR BESTIMMUNG UND/ODER ÜBERWACHUNG EINER PROZESSGRÖSSE EINES MEDIUMS**
DEVICE AND METHOD FOR DETERMINING AND/OR MONITORING A PROCESS VARIABLE OF A MEDIUM
DISPOSITIF ET PROCEDE POUR DETERMINER ET/OU SURVEILLER UNE GRANDEUR DE PROCESSUS D'UN MILIEU

(30) Priorität: 06.02.2003 DE 10304968
(43) Veröffentlichungstag der Anmeldung: 02.11.2005
(73) Patentinhaber: Endress + Hauser GmbH + Co. KG, 79689 Maulburg (DE)
(72) Erfinder: MÜLLER, Alexander, 79361 Sasbach-Jechtingen (DE); ROMPF, Christoph, IN 46143 Greenwood (US)
(74) Vertreter: Andres, Angelika Maria
(86) Internationale Anmeldenummer: PCT/EP2004/001040
(87) Internationale Veröffentlichungsnummer: WO 2004/070320

(56) Entgegenhaltungen:
- DE-A- 4 232 659
- DE-A- 19 933 812
- GB-A- 2 325 743
- US-A- 4 764 879
- US-A- 5 355 129
- US-A- 5 892 458
- US-A- 5 948 962

## Beschreibung

Die Erfindung bezieht sich auf eine Vorrichtung zur Bestimmung und/oder Überwachung einer chemischen oder physikalischen Prozessgröße eines Mediums in einem Behälter, mit einer Messeinheit, die ein erstes Ausgangssignal erzeugt, und mit einer Regel-/Auswerteeinheit, die das erste Ausgangssignal der Messeinheit weiterverarbeitet. Weiterhin bezieht sich die Erfindung auf ein entsprechendes Verfahren. Bei den Prozessgrößen kann es sich beispielsweise um den Füllstand, die Dichte, die Viskosität, den Druck, den pH-Wert oder die Temperatur des Mediums handeln.

Füllstandsmessgeräte, wie sie von der Anmelderin produziert und vertrieben werden, dienen z.B. der Überwachung, dass ein vorgegebener Grenzstand nicht über- oder unterschritten wird. Sie dienen also entweder dem Überlauf- oder dem Leerlaufschutz. In ersten Fall muss verhindert werden, dass eine Substanz überläuft und somit vielleicht die Umwelt verschmutzt. Im anderen Fall muss ein Leerlaufen eines Behälters verhindert werden, um z.B. Pumpen vor dem Heißlaufen zu schützen, was besonders bei entflammbaren Substanzen eine Gefahr darstellt. Handelt es sich nun um sehr gefährliche Substanzen, so muss die Sicherheit, die sich aus den Messgeräten - auch bezeichnet als Grenzstandschalter- ergibt, noch erhöht werden. So muss z.B. auch während des Prozesses ständig gewährleistet sein, dass das Messgerät ordnungsgemäß funktioniert. Von der Anmelderin wird eine ständige Selbstkontrolle z.B. im Failsafe-Konzept einiger Geräte verwirklicht.

Ein Messsystem besteht üblicherweise aus einer Messeinheit und einer Regel-/Auswerteeinheit. Bei der Messeinheit handelt es sich z.B. um einen Liquiphanten, wie er von der Anmelderin hergestellt und vertrieben wird. Bei einem solchen Liquiphanten wird eine Schwinggabel in den Behälter eingeführt, in dem sich das Medium befindet. Die Gabel wird dann zu Schwingungen angeregt. Die Frequenz und die Amplitude der Schwingungen hängen davon ab, ob die Gabel in Luft oder in dem Medium schwingt. In dem Medium wird die Dämpfung der Schwingung erhöht und somit nehmen die Amplitude und die Frequenz ab. Da die Gabel an einem wohldefinierten Ort angebracht ist, lässt sich somit z.B. durch eine Frequenzänderung feststellen, dass ein Füllstand vom Medium erreicht worden ist. Üblicherweise wird die Frequenz und nicht die Amplitude ausgewertet. Im Fall der Übertüllsicherung würde dies bedeuten, dass die Gabel zunächst in Luft schwingt und dass sich durch die Bedeckung durch das Medium die Frequenz vermindert. Somit ist der Übergang zu einer niedrigeren Schwingungsfrequenz ein Zeichen dafür, dass der Füllstand erreicht worden ist. Wird die Messeinheit für die Leerlaufsicherheit benutzt, so ist wiederum eine Erhöhung der Frequenz ein Zeichen für das Unterschreiten des Füllstands, da die Schwingfrequenz der frei gewordenen Schwinggabel höher ist als im bedeckten Zustand.

Die Messeinheit übergibt ihre Messdaten üblicherweise an die Regel-/Auswerteeinheit, die entweder direkt, z.B. durch das Schließen eines Ventils eine Aktion oder einen Alarm auslöst, oder die aus den Messdaten ein passendes Alarmsignal erzeugt und dieses Alarmsignal z.B. auf ein passendes Bussystem übergibt. Neben den Messdaten können jedoch von der Messeinheit auch Daten übergeben werden, die z.B. die Resonanzfrequenz der schwingfähigen Einheit der Messeinheit beinhalten. Dies wird z.B. dafür benutzt, dass bei einem Austausch der schwingfähigen Einheit nicht ebenfalls die Regel-/Auswerteeinheit ausgetauscht oder umprogrammiert werden muss, weil die Schwingfrequenz der Messeinheit in Luft, die z.B. als Referenzpunkt dient, eine andere ist (siehe dazu die Patentschrift DE 42 32 659).

Eine Voraussetzung für die effektive und richtige Überwachung des Füllstands ist, dass die Messeinheit und die Regel-/Auswerteeinheit die gleiche Messaufgabe erfüllen. Ist z.B. die Messeinheit für die Überfüllsicherheit zuständig, so wird sie beim Erreichen des Füllstands z.B. ihre Schwingfrequenz in Luft und ihre momentane Schwingfrequenz zur Regel-/Auswerteeinheit melden. Die Schwingfrequenz ist wegen der Bedeckung niedriger als bei der Schwingung in Luft und somit reagiert die Messeinheit auf diese niedrigere Frequenz. Ist jedoch die Regel-/Auswerteeinheit für den Leerlaufschutz eingestellt, so wird sie diesen beiden Frequenzen entnehmen, dass die schwingfähige Einheit der Messeinheit vom Medium bedeckt ist, weil die Schwingfrequenz kleiner als in Luft ist. Daher wird die Regel-/Messeinheit, die die Aufgabe der Leerlaufsicherheit erfüllt, keine Reaktion veranlassen. Dies führt dann zu einem Überlauf mit entsprechenden Gefahren für Mensch und Umwelt. Es ließe sich auch vorstellen, dass die Messeinheit bei der Überlaufsicherheit passend mit einer Meldung reagiert. Die Regel-/Auswerteeinheit im Fall der Leerlaufsicherheit könnte auf eine solche Meldung, der von der Regel-/Auswerteeinheit als Unterschreiten des Füllstands interpretiert wird, z.B. mit dem Öffnen eines Zulaufventils reagieren, was fatal wäre, da der maximale Füllstand bereits erreicht ist.

In der Patentschrift US 5,948,962 wird ein Gasdetektionssystem bestehend aus einem austauschbaren Gassensor und einem Messkopf beschrieben. Der Sensor wird über eine standardisierte Steckverbindung mit dem Messkopf verbunden. Damit sichergestellt ist, dass der zum Messkopf passende Sensor angeschlossen wird, werden gasspezifische Daten des Sensors ausgelesen und mit den entsprechenden Daten des Messkopfs verglichen. Nur wenn die Daten zueinander passen, d.h. wenn der Sensor zum Messkopf passt, werden auch die Messdaten des Sensors vom Messkopf akzeptiert.

In der Patentschrift US 5,355,129 wird ein Messwertaufnehmer zur Erfassung physikalischer Größen beschrieben, welcher einen Kennungsgeber zur Speicherung von Korrekturdaten aufweist.

Daher ist es Aufgabe der Erfindung, eine Vorrichtung und ein Verfahren zu beschreiben, um sicherzustellen, dass die Messeinheit und die Regel-/Auswerteeinheit die gleiche Sicherheits-, Schutz- oder Messaufgabe erfüllen.

Die Aufgabe wird erfindungsgemäß in Bezug auf die Vorrichtung dadurch gelöst, dass der Messeinheit eine erste Aufgabe zugeordnet ist, dass der Regel-/Auswerteeinheit eine zweite Aufgabe zugeordnet ist, dass mindestens eine erste und eine zweite Aufgabenerkennungseinheit vorgesehen sind, wobei die erste Aufgabenerkennungseinheit die Aufgabe der Messeinheit erkennt, und wobei die zweite Aufgabenerkennungseinheit die Aufgabe der Regel-/Auswerteeinheit erkennt, dass eine erste und eine zweite Zuordnungseinheit vorgesehen sind, wobei über die erste Zuordnungseinheit mit der ersten Aufgabe der Messeinheit eine erste Kodierung verbunden ist, und wobei über die zweite Zuordnungseinheit mit der zweiten Aufgabe der Regel-/Auswerteeinheit eine zweite Kodierung verbunden ist, dass eine Vergleichseinheit vorgesehen ist, mit der die Messeinheit und die Regel-/Auswerteeinheit verbunden sind, und die die erste Kodierung mit der zweiten Kodierung vergleicht, und dass die Regel-/Auswerteeinheit das erste Ausgangssignal nur dann weiterverarbeitet, wenn beide Kodierungen identisch sind. In anderen Fällen ließe sich die Ausgabe einer Fehlermeldung bewerkstelligen oder die Messeinheit und/oder die Regel-/Auswerteeinheit wird blockiert. Es könnte auch die gesamte Anlage gesperrt werden.

Die Messeinheit und die Regel-/Auswerteeinheit erhalten also separat ihre jeweilige Aufgabe. Diese Trennung hat z.B. den Vorteil, dass beide Einheiten getrennt getauscht werden können. Mit jeder Aufgabe ist eine Kodierung verbunden. Die Art der Kodierung hängt dabei auch vom Übertragungsprotokoll zwischen den Einheiten und der Vergleichseinheit ab. Die Zuordnung einer Aufgabe zu einer Kodierung ist dabei in entsprechenden Zuordnungseinheiten hinterlegt. Je nach der Anzahl der Aufgaben sind die Zuordnungseinheiten passend dimensioniert. Handelt es sich beispielsweise um die Aufgaben Überlauf- oder Leerlaufsicherung, so kann es sich beispielsweise um einen Umschalter handeln, der zwischen zwei unterschiedlichen Kodierungen umschaltet. Eine Vergleichseinheit vergleicht dann die beiden Kodierungen, d.h. durch die Kodierungen werden die Aufgaben in ein Format übertragen, das passend ausgewertet werden kann. Andererseits wird jedoch über die Kodierung auch erzwungen, dass nur Einheiten miteinander kommunizieren können, die über eine solche Kodierung verfügen, d.h. die mit diesem besonderen Maß an Sicherheit verbunden sind. Gleichzeitig ließe sich auch über die Verwendung von unterschiedlichen und somit unvereinbaren Zuordnungen zwischen Aufgabe und Kodierung sicherstellen, dass z.B. unterschiedliche Gerätegenerationen nicht miteinander kommunizieren können. Die Aufgabenzuordnung kann z.B. über die Anschlussverdrahtung erfolgen. Möglich sind jedoch auch Dip-Schalter, die zwar deutlich einfacher umzustellen sind, die deshalb jedoch mit einem größeren Risiko behaftet sind.

Gemäß einer vorteilhaften Ausgestaltung ist mindestens eine Kodiereinheit vorgesehen, die das erste Ausgangssignal der Messeinheit entsprechend der ersten Kodierung kodiert. Über die Kodierung des Ausgangssignal wird also die Kodierung zur Vergleichseinheit übertragbar. Dabei können die eigentlichen Messsignale passend kodiert werden oder es können zusätzliche Signale erzeugt werden, deren einzige Aufgabe darin besteht, die Kodierung zu tragen.

Eine vorteilhafte Ausgestaltung sieht vor, dass die Regel-/Auswerteeinheit ein zweites Ausgangssignal erzeugt, und dass mindestens eine Kodiereinheit vorgesehen ist, die das zweite Ausgangssignal der Regel-/Auswerteeinheit entsprechend der zweiten Kodierung kodiert. Auch hier also soll die Kodierung auf passende Ausgangssignale aufgeprägt werden. Diese Ausgangssignale sind nur für die Übermittlung der Kodierung vorgesehen. Die Regel-/Auswerteeinheit kann zwar auch andere Ausgangssignale erzeugen, die z.B. einer Leitstelle den Auftrag für Aktionen oder einen Alarm übermitteln, aber diese sind erst nach der Verarbeitung der Ausgangssignale der Messeinheit möglich und für diese Verarbeitung muss zunächst sichergestellt sein, dass sie verarbeitet werden dürfen.

Eine vorteilhafte Ausgestaltung sieht vor, dass die Vergleichseinheit derartig ausgestaltet ist, dass sie die Kodierung des ersten oder zweiten Ausgangssignals mit der zweiten oder ersten Kodierung vergleicht. Eine weitere Ausgestaltung beinhaltet, dass die Vergleichseinheit derartig ausgestaltet ist, dass sie die Kodierung des ersten Ausgangssignals mit der Kodierung des zweiten Ausgangssignals vergleicht. In der Vergleichseinheit werden also entweder die Kodierungen direkt verglichen, wobei es der technischen Realisierung überlassen bleibt, wie die Kodierungen aus der Mess- und Regel-/Auswerteinheit an die Vergleichseinheit gelangt. Dann besteht noch die Möglichkeit, das wenigstens von einer Einheit die Kodierung über das entsprechende Ausgangssignal übertragen wird. Und schließlich werden die Kodierungen der Ausgangssignale direkt miteinander verglichen. Diese Variante würde also bedeuten, dass z.B. die Messeinheit die Messdaten kodiert an die Vergleichseinheit übergibt. Dorthin gelangen ebenfalls die kodierten Ausgangssignale der Regel-/Auswerteeinheit. Dann werden die beiden Signale hinsichtlich der Kodierung miteinander verglichen. In dem Fall, dass die Kodierungen identisch sind, gelangt das Ausgangssignal der Messeinheit über die Vergleichseinheit an die Regel-/Auswerteeinheit und kann dort weiterverarbeitet oder z.B. auf ein Bussystem übertragen werden. Für den Vergleich muss der Vergleichseinheit nicht bekannt sein, welche Aufgabe mit der jeweiligen Kodierung verbunden ist. Es geht nur darum, dass die Messeinheit und die Regel-/Auswerteeinheit mit der gleichen Kodierung und somit mit der gleichen Aufgabe beaufschlagt sind.

Eine vorteilhafte Ausgestaltung beinhaltet, dass es sich bei dem kodierten ersten und/oder bei dem kodierten zweiten Ausgangssignal um frequenzmodulierte Stromsignale handelt. Dies empfiehlt sich z.B. bei der Zwei-Draht-Technik. Das Erreichen eines Füllstands wird z.B. in der 4...20 mA Signalisierung durch eine vorgegebene Signalhöhe angegeben. Auf diese Stromsignale ließe sich dann die Frequenzmodulation anwenden.

Die Aufgabe wird erfindungsgemäß entsprechend dem Verfahren dadurch gelöst, dass von der Messeinheit eine erste Aufgabe erfüllt wird, dass für die erste Aufgabe der Messeinheit eine erste Kodierung vorgesehen wird, dass von der Regel-/Auswerteeinheit eine zweite Aufgabe erfüllt wird, dass mit der zweiten Aufgabe der Regel-/Auswerteeinheit eine zweite Kodierung verbunden wird, dass die erste Kodierung und die zweite Kodierung miteinander verglichen werden, und dass das erste Ausgangssignal der Messeinheit nur in dem Fall von der Regel-/Auswerteeinheit weiterverarbeitet wird, dass die erste und die zweite Kodierung identisch sind. Mit jeder Aufgabe ist also eine Kodierung verbunden und durch den Vergleich der Kodierungen lässt sich herausfinden, ob die Aufgaben jeweils die gleichen sind. Nur im Fall der Identität der Kodierungen werden die Ausgangssignale der Messeinheit weiterverarbeitet.

Gemäß einer vorteilhaften Ausgestaltung ist vorgesehen, dass das erste Ausgangssignal der Messeinheit mit der ersten Kodierung kodiert wird. Somit ist es möglich, die Kodierung zu übertragen. Dabei kann es sich bei dem Ausgangssignale um die eigentlichen Messdaten oder um besonderen Signale für die Kodierung handeln.

Eine weitere Ausgestaltung sieht vor, dass die Regel-/Auswerteeinheit ein zweites Ausgangssignal erzeugt, das mit der zweiten Kodierung kodiert wird. Das Prinzip also, um die Kodierung der Messeinheit zu vermitteln, wird hier auch bei der Regel-/Auswerteeinheit verwendet, jedoch mit dem Unterschied, dass hier spezielle Signale verwendet werden müssen.

Dazu gehört auch eine nützliche Ausgestaltung, die beinhaltet, dass die Kodierung des ersten oder zweiten Ausgangssignals mit der zweiten oder ersten Kodierung verglichen wird. Eine weiterer Ausgestaltung beinhaltet, dass die Kodierung des ersten Ausgangssignals mit der Kodierung des zweiten Ausgangssignals verglichen wird. Aus den Signalen werden also die wichtigen Kodierungen wieder herausgeholt, um sie vergleichen zu können.

Die Erfindung wird anhand der nachfolgenden Zeichnungen näher erläutert. Es zeigt:
- Fig. 1:: ein Blockschaltbild der Vorrichtung; und
- Fig. 2:: ein Flussdiagramm des Verfahrens.

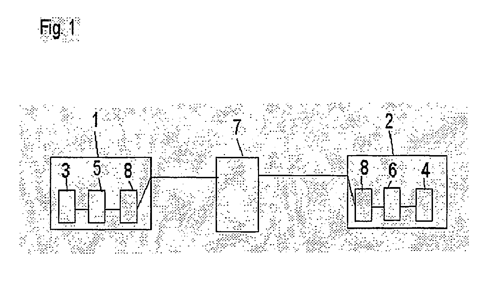

Fig. 1 zeigt ein Blockschaltbild der Vorrichtung. Im gezeigten Fall sind einige Komponenten der Erfindung bereits in den Geräten integriert. Die Messeinheit 1 verfügt über eine Aufgabenerkennungseinheit 3, eine Zuordnungseinheit 5 und eine Kodiereinheit 8. Beispielsweise über die Anschlussverdrahtung ist der Messeinheit eine Aufgabe zugewiesen, z.B. Überfüllsicherung. Diese Aufgabe wird von der Aufgabenerkennungseinheit 3 erkannt und eine dementsprechende Anfrage/Auftrag an die Zuordnungseinheit 5 übergeben. Dort befinden sich die Zuordnungen der Aufgaben zu den Kodierungen. Mit der passenden Kodierung tritt dann die Kodiereinheit 8 in Aktion, die die Ausgangssignale der Messeinheit 1 mit dieser Kodierung kodiert. Somit tragen also die Ausgangssignale der Messeinheit 1 die Information darüber, welche Aufgabe die Messeinheit 1 zu erfüllen hat. Durch diese Information wird also auch übermittelt, wie die Ausgangssignale zu interpretieren sind. Die Aufgabenerkennungseinheit 3, die Zuordnungseinheit 5 und die Kodiereinheit 8 können z.B. in einem einzigen Mikroprozessor integriert sein. In der Regel-/Auswerteeinheit 2 befinden sich die Aufgabenerkennungseinheit 4, die Zuordnungseinheit 6 und eine Kodiereinheit 8. Hier wird also von der Regel-/Auswerteeinheit 2 ebenfalls ein zweites Ausgangssignal erzeugt. Die Ausgangssignale von der Messeinheit 1 und von der Regel-/Auswerteeinheit 2 gelangen beide zur Vergleichseinheit 7. Diese vergleicht die beiden Kodierungen miteinander. Sind sie identisch, so kann die Regel-/Auswerteeinheit 2 die Ausgangssignale der Messeinheit 1 verarbeiten. Sind die Kodierungen unterschiedlich, so kann ein Warnsignal ausgegeben werden oder die Anlage wird gestoppt oder die Regel-/Auswerteeinheit 2 wird gesperrt. Weitere Möglichkeiten sind denkbar und sollten sich den Anforderungen anpassen. Benutzen die Messeinheit 1 und die Regel-/Auswerteeinheit 2 unterschiedliche Tabellen für die Übersetzung einer Aufgabe in eine Kodierung, so funktioniert der Kontakt nicht. In einer weiteren Ausgestaltung kann die Vergleichseinheit 7 auch Bestandteil der Messeinheit 1 oder der Regel-/Auswerteeinheit 2 sein. Dadurch würde dann die Kodierung der entsprechenden Ausgangssignale entfallen, da die Kodierung direkt an die Vergleichseinheit 7 übergeben werden würde.

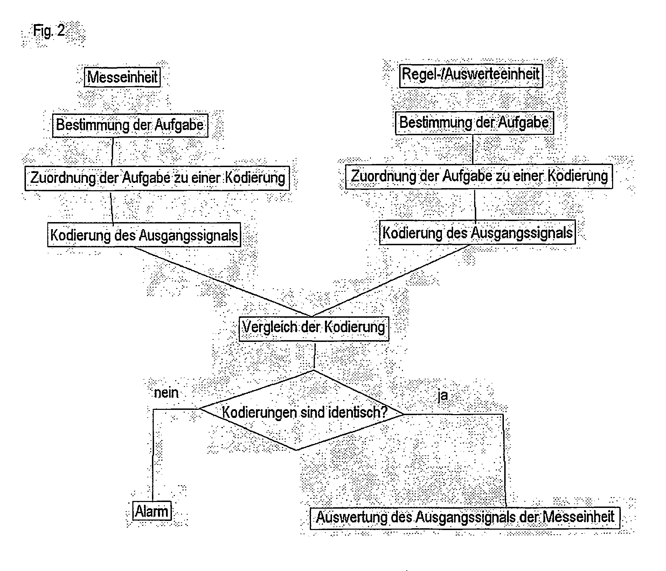

In Fig. 2 findet sich ein Flussdiagramm des Verfahrens der Erfindung. Auf der Seite des Messeinheit und der Regel-/Auswerteeinheit ereignet sich folgende Schritte: die Aufgabe wird erkannt, es wird die passende Kodierung festgestellt und die Ausgangssignale werden mit dieser Kodierung kodiert. Anschließend werden beide Kodierungen verglichen. Sind sie identisch, so kann die Regel-/Auswerteeinheit das erste Ausgangssignal der Messeinheit verarbeiten. Unterscheiden sich die Kodierungen, so wird z.B. ein Alarm ausgelöst.

### Bezugszeichenliste

- 1: Messeinheit
- 2: Regel-/Auswerteeinheit
- 3: Aufgabenerkennungseinheit
- 4: Aufgabenerkennungseinheit
- 5: Zuordnungseinheit
- 6: Zuordnungseinheit
- 7: Vergleichseinheit
- 8: Kodiereinheit

## Patentansprüche

1. Vorrichtung zur Bestimmung und/oder Überwachung einer chemischen oder physikalischen Prozessgröße eines Mediums in einem Behälter,
mit einer Messeinheit (1), die ein erstes Ausgangssignal erzeugt,
und
mit einer Regel-/Auswerteeinheit (2),
die das erste Ausgangssignal der Messeinheit (1) weiterverarbeitet,
**dadurch gekennzeichnet,**
**dass** der Messeinheit (1) eine erste Aufgabe zugeordnet ist,
**dass** der Regel--IAuswerteeinheit (2) eine zweite Aufgabe zugeordnet ist, dass mindestens eine erste (3) und eine zweite Aufgabenerkennungseinheit (4) vorgesehen sind,
wobei die erste Aufgabenerkennungseinheit (3) die Aufgabe der Messeinheit (1) erkennt,
und
wobei die zweite Aufgabenerkennungseinheit (4) die Aufgabe der Regel-/Auswerteeinheit (2) erkennt,
**dass** eine erste (5) und eine zweite Zuordnungseinheit (6) vorgesehen sind,
wobei über die erste Zuordnungseinheit (5) mit der ersten Aufgabe der Messeinheit (1) eine erste Kodierung verbunden ist,
und
wobei über die zweite Zuordnungseinheit (6) mit der zweiten Aufgabe der Regel-/Auswerteeinheit (2) eine zweite Kodierung verbunden ist,
**dass** eine Vergleichseinheit (7) vorgesehen ist,
mit der die Messeinheit (1) und die Regel-/Auswerteeinheit (2) verbunden sind,
und
die die erste Kodierung mit der zweiten Kodierung vergleicht,
und
**dass** die Regel-/Auswerteeinheit (2) das erste Ausgangssignal nur dann weiterverarbeitet, wenn beide Kodierungen identisch sind.

2. Vorrichtung nach Anspruch 1,
**dadurch gekennzeichnet,**
**dass** mindestens eine Kodiereinheit (8) vorgesehen ist,
die das erste Ausgangssignal der Messeinheit (1) entsprechend der ersten Kodierung kodiert.

3. Vorrichtung nach Anspruch 1 oder 2,
**dadurch gekennzeichnet,**
**dass** die Regel-/Auswerteeinheit (2) ein zweites Ausgangssignal erzeugt, und
**dass** mindestens eine Kodiereinheit (8) vorgesehen ist,
die das zweite Ausgangssignal der Regel-/Auswerteeinheit (2) entsprechend der zweiten Kodierung kodiert.

4. Vorrichtung nach Anspruch 1, 2 oder 3,
**dadurch gekennzeichnet,**
**dass** die Vergleichseinheit (7) derartig ausgestaltet ist,
**dass** sie die Kodierung des ersten oder zweiten Ausgangssignals mit der zweiten oder ersten Kodierung vergleicht.

5. Vorrichtung nach Anspruch 1, 2 oder 3,
**dadurch gekennzeichnet,**
**dass** die Vergleichseinheit (7) derartig ausgestaltet ist,
**dass** sie die Kodierung des ersten Ausgangssignals mit der Kodierung des zweiten Ausgangssignals vergleicht.

6. Vorrichtung nach Anspruch 2 oder 3,
**dadurch gekennzeichnet,**
**dass** es sich bei dem kodierten ersten und/oder bei dem kodierten zweiten Ausgangssignal um frequenzmodulierte Stromsignale handelt.

7. Verfahren zur Bestimmung und/oder Überwachung einer chemischen oder physikalischen Prozessgröße eines Mediums in einem Behälter,
mit einer Messeinheit (1), die ein erstes Ausgangssignal erzeugt, und
mit einer Regel-/Auswerteeinheit (2),
die das erste Ausgangssignal der Messeinheit (1) weiterverarbeitet,
**dadurch gekennzeichnet,**
**dass** von der Messeinheit (1) eine erste Aufgabe erfüllt wird,
**dass** für die erste Aufgabe der Messeinheit (1) eine erste Kodierung vorgesehen wird,
**dass** von der Regel-/Auswerteeinheit (2) eine zweite Aufgabe erfüllt wird,
**dass** mit der zweiten Aufgabe der Regel-/Auswerteeinheit (2) eine zweite Kodierung verbunden wird,
**dass** die erste Kodierung und die zweite Kodierung miteinander verglichen werden,
und
**dass** das erste Ausgangssignal der Messeinheit (1) nur in dem Fall von der Regel-/Auswerteeinheit (2) weiterverarbeitet wird, dass die erste und die zweite Kodierung identisch sind.

8. Verfahren nach Anspruch 7,
**dadurch gekennzeichnet,**
**dass** das erste Ausgangssignal der Messeinheit (1) mit der ersten Kodierung kodiert wird.

9. Verfahren nach Anspruch 7 oder 8,
**dadurch gekennzeichnet,**
**dass** die Regel-/Auswerteeinheit (2) ein zweites Ausgangssignal erzeugt,
das mit der zweiten Kodierung kodiert wird.

10. Verfahren nach Anspruch 8 oder 9,
**dadurch gekennzeichnet,**
**dass** die Kodierung des ersten oder zweiten Ausgangssignals mit der zweiten oder ersten Kodierung verglichen wird.

11. Verfahren nach Anspruch 8 oder 9,
**dadurch gekennzeichnet,**
**dass** die Kodierung des ersten Ausgangssignals mit der Kodierung des zweiten Ausgangssignals verglichen wird.

## Claims

1. A device for determining and/or monitoring a chemical or physical process variable of a medium in a container, with a measuring unit (1) which generates a first output signal and with a control/evaluation unit (2) which further processes the first output signal from the measuring unit (1), **characterised in that** the measuring unit (1) is assigned a first task, **in that** the control/evaluation unit (2) is assigned a second task, **in that** at least one first (3) and one second task identification unit (4) are provided, wherein the first task identification unit (3) identifies the task of the measuring unit (1), and wherein the second task identification unit (4) identifies the task of the control/evaluation unit (2), **in that** a first (5) and a second assignment unit (6) are provided, wherein a first coding is associated with the first task of the measuring unit (1) via the first assignment unit (5), and wherein a second coding is associated with the second task of the control/evaluation unit (2) via the second assignment unit (6), **in that** a comparison unit (7) is provided, to which the measuring unit (1) and the control/evaluation unit (2) are connected and which compares the first coding with the second coding, and **in that** the control/evaluation unit (2) only further processes the first output signal when the two codings are identical.

2. A device according to claim 1, **characterised in that** at least one encoding unit (8) is provided which encodes the first output signal from the measuring unit (1) in accordance with the first coding.

3. A device according to claim 1 or 2, **characterised in that** the control/evaluation unit (2) generates a second output signal and **in that** at least one encoding unit (8) is provided which encodes the second output signal from the control/evaluation unit (2) in accordance with the second coding.

4. A device according to claim 1, 2 or 3, **characterised in that** the comparison unit (7) is configured so that it compares the coding of the first or second output signal with the second or first coding.

5. A device according to claim 1, 2 or 3, **characterised in that** the comparison unit (7) is configured so that it compares the coding of the first output signal with the coding of the second output signal.

6. A device according to claim 2 or 3, **characterised in that** the encoded first and/or encoded second output signal are frequency-modulated current signals.

7. A method of determining and/or monitoring a chemical or physical process variable of a medium in a container, with a measuring unit (1) which generates a first output signal and with a control/evaluation unit (2) which further processes the first output signal from the measuring unit (1), **characterised in that** a first task is performed by the measuring unit (1), **in that** a first coding is provided for the first task of the measuring unit (1), **in that** a second task is performed by the control/evaluation unit (2), **in that** a second coding is associated with the second task of the control/evaluation unit (2), **in that** the first coding and the second coding are compared with one another, and **in that** the first output signal from the measuring unit (1) is only further processed by the control/evaluation unit (2) if the first and the second coding are identical.

8. A method according to claim 7, **characterised in that** the first output signal from the measuring unit (1) is encoded with the first coding.

9. A method according to claim 7 or 8, **characterised in that** the control/ evaluation unit (2) generates a second output signal which is encoded with the second coding.

10. A method according to claim 8 or 9, **characterised in that** the coding of the first or second output signal is compared with the second or first coding.

11. A method according to claim 8 or 9, **characterised in that** the coding of the first output signal is compared with the coding of the second output signal.

## Revendications

1. Dispositif destiné à la détermination et/ou la surveillance d'une grandeur de process chimique ou physique d'un produit au sein d'un réservoir, avec une unité de mesure (1), qui génère un premier signal de sortie, et
avec une unité de régulation / d'exploitation (2),
qui traite le premier signal de sortie de l'unité de mesure (1)
**caractérisé en ce**
**qu'**une première tâche est attribuée à l'unité de mesure (1),
**qu'**une deuxième tâche est attribuée à l'unité de régulation / d'exploitation (2),
**qu'**au moins une première (3) et une deuxième unité de détection des tâches (4) sont prévues,
la première unité de détection des tâches (3) détectant la tâche de l'unité de mesure (1),
et
la deuxième unité de détection des tâches (3) détectant la tâche de l'unité de régulation / d'exploitation (2),
**qu'**une première (5) et une deuxième unité d'attribution (6) sont prévues
un premier codage étant associé à la première tâche de l'unité de mesure (1) via la première unité d'attribution (5),
et
un deuxième codage étant associé à la deuxième tâche de l'unité de régulation / d'exploitation (2) via la deuxième unité d'attribution (6),
**qu'**une unité de comparaison (7) est prévue,
avec laquelle l'unité de mesure (1) et l'unité de régulation / d'exploitation sont reliées, et
qui compare le premier codage avec le deuxième codage,
et
**que** l'unité de régulation / d'exploitation (2) ne traite le premier signal de sortie que lorsque les deux codages sont identiques.

2. Dispositif selon la revendication 1,
**caractérisé en ce**
**qu'**au moins une unité de codage (8) est prévue,
qui code le premier signal de sortie de l'unité de mesure (1) conformément au premier codage.

3. Dispositif selon la revendication 1 ou 2,
**caractérisé en ce**
**qu'**au moins une unité de codage (8) est prévue,
qui code le deuxième signal de sortie de l'unité de régulation d'exploitation (2) conformément au deuxième codage.

4. Dispositif selon la revendication 1, 2 ou 3,
**caractérisé en ce**
**que** l'unité de comparaison (7) est conçue de telle manière,
**qu'**elle compare le codage du premier ou du deuxième signal de sortie avec le premier ou le deuxième codage.

5. Dispositif selon la revendication 1, 2 ou 3,
**caractérisé en ce**
**que** l'unité de comparaison (7) est conçue de telle manière,
**qu'**elle compare le codage du premier signal de sortie avec le codage du deuxième signal de sortie.

6. Dispositif selon la revendication 2 ou 3,
**caractérisé en ce**
**que** concernant le premier signal de sortie codé et/ou concernant le deuxième signal de sortie, il s'agit de signaux de courant modulés en fréquence.

7. Procédé destiné à la détermination et/ou la surveillance d'une grandeur de process chimique ou physique d'un produit au sein d'un réservoir, avec une unité de mesure (1), qui génère un premier signal de sortie, et
avec une unité de régulation / d'exploitation (2),
qui traite le premier signal de sortie de l'unité de mesure (1)
**caractérisé en ce**
**qu'**une première tâche est attribuée à l'unité de mesure (1),
**qu'**est prévu un premier codage pour la première tâche de l'unité de mesure (1),
**qu'**une deuxième tâche est attribuée à l'unité de régulation / d'exploitation (2),
**qu'**un deuxième codage est lié avec la deuxième tâche de l'unité de régulation / d'exploitation (2),
**que** le premier codage et le deuxième codage sont comparés entre eux,
et
**que** le premier signal de sortie de l'unité de mesure (1) n'est traité par l'unité de régulation / d'exploitation que dans le cas où le premier et le deuxième codage sont identiques.

8. Procédé selon la revendication 7,
**caractérisé en ce**
**que** le premier signal de sortie de l'unité de mesure (1) est codé avec le premier codage.

9. Procédé selon la revendication 7 ou 8,
**caractérisé en ce**
**que** l'unité de régulation / d'exploitation génère un deuxième signal de sortie, qui est codé avec le deuxième codage.

10. Procédé selon la revendication 8 ou 9,
**caractérisé en ce**
**que** le codage du premier ou du deuxième signal de sortie est comparé avec le deuxième ou le premier codage.

11. Procédé selon la revendication 8 ou 9,
**caractérisé en ce**
**que** le codage du premier signal de sortie est comparé avec le codage du deuxième signal de sortie.
